# EUROPEAN PATENT APPLICATION

(11) **EP 4 715 362 A1**
(43) Date of publication of application: **25.03.2026**
(21) Application number: 23866634.1
(22) Date of filing: 30.08.2023
(51) Int. Cl.: G01M 99/00

(54) **MACHINE EQUIPMENT MONITORING SYSTEM AND MACHINE EQUIPMENT MONITORING METHOD**

(30) Priority: 15.05.2023 JP 2023080376
(71) Applicant: NSK Ltd., Tokyo 141-8560 (JP)
(72) Inventor: OHORI Masato, Fujisawa-shi Kanagawa 2518501 (JP); SUGINOHARA Masakazu, Fujisawa-shi Kanagawa 2518501 (JP); KANEMATSU Takayuki, Fujisawa-shi Kanagawa 2518501 (JP); ABE Keigo, Fujisawa-shi Kanagawa 2518501 (JP); SASAO Kunihiko, Fujisawa-shi Kanagawa 2518501 (JP)
(74) Representative: Grünecker Patent- und Rechtsanwälte PartG mbB
(86) International application number: PCT/JP2023/031625
(87) International publication number: WO 2024/236827

(57) **Abstract**

A mechanical equipment monitoring system includes a sensor, an actuator, a communication unit that transmits a trigger signal when the actuator is in a suitable state for the sensor to detect an operational state of the actuator, an information collection unit that collects, from the sensor, operational state data which indicates the operational state detected by the sensor upon receiving the trigger signal from the communication unit, and an information processing device that monitors the actuator based on the operational state data collected by the information collection unit.

## Description

### TECHNICAL FIELD

The present disclosure relates to a mechanical equipment monitoring system for monitoring mechanical equipment and a mechanical equipment monitoring method for monitoring the mechanical equipment.

### BACKGROUND ART

In recent years, there has been a movement to shift from time-based maintenance to condition-based (state-based) maintenance in order to improve an efficiency of maintenance work for mechanical equipment. One effective solution for realizing condition-based maintenance is to carry out condition monitoring and diagnosis of mechanical elements/parts such as bearings, ball screws and linear guides. Conventionally, because mechanical equipment (machine facility) such as a machine tool performs processing while moving a workpiece in three dimensions, i.e., the driving state of the machine element/parts changes from moment to moment, there is a problem that abnormality diagnosis of the mechanical equipment is not easy.

To deal with this problem, Patent Literature Document 1 discloses a diagnostic system for a machine tool that includes a device whose state changes with an operating state of an actuator of the machine tool, a sensor for detecting the state of the device, a signal processor for processing signals of the sensor, a controller provided on the machine tool to control the operation of the actuator, an input/output unit for entering a command to cause the controller to perform the operation control to the actuator, and notifying the operation status of the actuator, and a remote monitoring device for analyzing the state of the device. In the diagnostic system of Patent Literature Document 1, the controller transmits to the signal processor a first command instructing to generate and transmit the state description simplified-data relating to occurrence of abnormality of the device, and the signal processor generates and transmits the state description simplified-data to the controller in response to the first command received.

### LISTING OF REFERENCES

### Patent Literature Documents

Patent Literature Document 1: Japanese Patent No. 7104858

### SUMMARY OF THE INVENTION

### PROBLEMS TO BE SOLVED BY THE INVENTION

However, because Patent Literature Document 1 transmits the state description simplified-data to the controller of the mechanical equipment, such as a machine tool, a communication I/F for receiving the state description simplified-data must be provided in the controller of the mechanical equipment and a corresponding throughput is required in the controller of the mechanical equipment. Therefore, Patent Literature Document 1 has a problem that it is impossible to diagnose the mechanical equipment of a simple configuration not having a controller with sufficient throughput and a communication I/F.

One object of the present disclosure is to provide a mechanical equipment monitoring system and a mechanical equipment monitoring method capable of performing diagnosis of mechanical equipment having a simple configuration by eliminating the mechanical equipment's need to receive data for diagnosis of the mechanical equipment.

### SOLUTION TO THE PROBLEMS

A mechanical equipment monitoring system according to one aspect of the present disclosure includes a sensor, a mechanical equipment, an information collection device and an information processing device. The mechanical equipment has an actuator and a communication unit. The communication unit is configured to generate (send) a trigger signal when the actuator is in a suitable condition for the sensor to detect an operational state of the actuator. The information collection device collects, from the sensor, operational state data that indicates the operational state detected by the sensor upon receiving the trigger signal from the communication unit. The information processing device monitors the actuator based on the operational state data collected by the information collection device.

### ADVANTAGEOUS EFFECTS OF THE INVENTION

The present disclosure eliminates the mechanical equipment's need to receive data for the diagnosis of the mechanical equipment, and therefore it is possible to perform the diagnosis of the mechanical equipment having a simple configuration.

### BRIEF DESCRIPTION OF THE DRAWINGS

FIG. 1 is a block diagram showing a configuration of a mechanical equipment monitoring system according to a first embodiment of the present invention.
FIG. 2 is a flowchart showing the operation of a machine tool of the mechanical equipment monitoring system according to the first embodiment of the present invention.
FIG. 3 is a flowchart showing the operation of an information collection device of the mechanical equipment monitoring system according to the first embodiment of the present invention.
FIG. 4 is a sequence diagram of the mechanical equipment monitoring system according to the first embodiment of the present invention.
FIG. 5 is a timing chart of the mechanical equipment monitoring system according to the first embodiment of the present invention.
FIG. 6 is a timing chart of a mechanical equipment monitoring system according to a second embodiment of the present invention.
FIG. 7 is another timing chart of the mechanical equipment monitoring system according to the second embodiment of the present invention.
FIG. 8 is a timing chart of a mechanical equipment monitoring system according to a third embodiment of the present invention.
FIG. 9 is a block diagram showing a configuration of a mechanical equipment monitoring system according to a fourth embodiment of the present invention.
FIG. 10 is a sequence diagram of a mechanical equipment monitoring system according to a fifth embodiment of the present invention.
FIG. 11 is a block diagram showing a configuration of a mechanical equipment monitoring system according to a sixth embodiment of the present invention.
FIG. 12 is a sequence diagram of the mechanical equipment monitoring system according to the sixth embodiment of the present invention.
FIG. 13 is a timing chart of the mechanical equipment monitoring system according to the sixth embodiment of the present invention.
FIG. 14 is a block diagram showing a configuration of a mechanical equipment monitoring system according to a seventh embodiment of the present invention.
FIG. 15 is a sequence diagram of the mechanical equipment monitoring system according to the seventh embodiment of the present invention.
FIG. 16 is a timing chart of the mechanical equipment monitoring system according to the seventh embodiment of the present invention.

### MODE FOR CARRYING OUT THE INVENTION

Embodiments of the present invention will now be described with reference to the accompanying drawings. In the drawings, same and similar parts are denoted by same or similar reference numerals. It should be noted that the drawings are schematic, and the relationship between the thickness and the planar dimensions, the thickness ratio of layers, and the like may be different from actual ones. Therefore, specific thickness and dimensions should be determined on the basis of the following description. Further, the relationship and ratio of the dimensions illustrated in one drawing may be different from the relationship and ratio of the dimensions illustrated in other drawings.

The embodiments described below illustrate an exemplary apparatus/system and an exemplary method for embodying the technical idea of the present invention, and the material, the shape, the structure, the arrangement and the like of the parts included in the technical idea of the present invention are not limited to those described below. Various changes and/or modifications may be made to the embodiments described below within the technical scope defined by the appended claims.

### First Embodiment

### Configuration of Mechanical Equipment Monitoring System

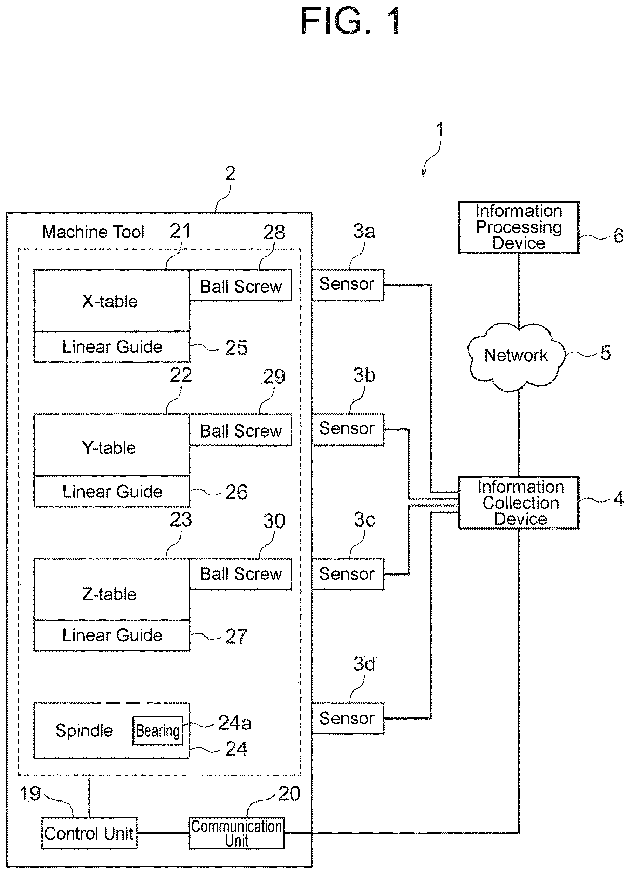

First, the configuration of the mechanical equipment monitoring system 1 according to a first embodiment of the present disclosure will be described in detail with reference to FIG. 1.

The mechanical equipment monitoring system 1 includes a machine tool 2, sensors 3a, 3b, 3c, 3d, an information collecting device 4, and an information processing device 6.

The machine tool 2 is a mechanical equipment that can perform processing in, for example, three axes (X-axis, Y-axis and Z-axis). The machine tool 2 includes a control unit 19, a communication unit 20, an X-table 21, a Y-table 22, a Z- table 23, a spindle 24, linear guides 25, 26, 27, and ball screws 28, 29, 30. In this specification, a group of mechanical parts/elements/devices (guide modules) including a drive source such as a motor, a bearing 24a, the spindle 24, the linear guides 25, 26, 27, the ball screws 28, 29, 30, and other elements/devices may be referred to as an actuator. It should be noted that the actuator may only include one of the bearing 24a, the spindle 24, the ball screws 28, 29, 30 and the linear guides 25, 26, 27.

The control unit 19 controls not only the operation of the entire machine tool 2, but the movements of the X-table 21, the Y-table 22, the Z-table 23, the spindle 24, the linear guides 25, 26, 27, and the ball screws 28, 29, 30. The control unit 19 also controls the operation of the communication unit 20.

The control unit 19 executes a normal cycle and a state monitoring and diagnosis cycle. In the normal cycle, the control unit 19 controls the operations of the X-table 21, the Y-table 22, the Z-table 23, the spindle 24, the linear guides 25, 26, 27, and the ball screws 28, 29, 30 to perform machining processes a predetermined number of times so as to perform machining to a workpiece. In the state monitoring and diagnosis cycle, the control unit 19 carries out a state monitoring and diagnosis process a predetermined number of times so as to monitor and diagnose the state of the machine tool 2. When (Before) executing the state monitoring and diagnostic process, the control unit 19 brings the spindle 24, the linear guides 25, 26, 27, and the ball screws 28, 29, 30 in a condition suitable for monitoring (desired condition for monitoring).

In this specification, the state suitable for monitoring (i.e., the suitable state) is a state in which the actuator is operated at a constant speed over a predetermined period, a state in which the actuator is accelerated from a rest condition, operated at a constant speed and then decelerated to stop, a state in which an amount of variations in the load applied to the actuator is equal to or less than a predetermined value, or a state in which an amount of variations in the temperature of the actuator is equal to or less than a predetermined value. For example, if the monitored object (target of monitoring) is the bearing 24a of the spindle 24, the state suitable for monitoring is a state in which constant velocity rotation of the bearing 24a continues for a certain period. If the monitored object is the linear guide 25, 26 or 27, the state suitable for monitoring is a state in which constant velocity motion of the linear guide continues for a certain period. If the monitored object is the ball screw 28, 29 or 30, the state suitable for monitoring is a state in which a series of movements (acceleration starts from the rest condition, the constant velocity motion continues for a while and then deceleration takes place to stop) are carried out in the same profile every time. By performing the state monitoring and diagnosis in the state (condition) suitable for monitoring, it is possible to suppress erroneous judgment caused by speed variations of the actuator, load variations (fluctuations) and an insufficient amount of good data.

It should be noted that an unsuitable state for monitoring is a state in which constant velocity or constant velocity motion does not continue for sufficient time to carry out the state monitoring and diagnosis, or a state in which load fluctuation is large.

The communication unit 20 operates under the control of the control unit 19, and transmits and receives signals to and from the information collection device 4.

The X-table 21 supports the workpiece and moves in the X-axis direction as an X-axis motor (not shown) is driven.

The Y-table 22 supports the workpiece and moves in the Y-axis direction as a Y-axis motor (not shown) is driven.

The Z-table 23 supports the workpiece and moves in the Z-axis direction as a Z-axis motor (not shown) is driven.

The spindle 24 rotates as a spindle motor (not shown) is driven. The spindle 24 has the bearing 24a therein.

The linear guide 25 supports the X-table 21 such that the X-table 21 can move in the X-axis direction.

The linear guide 26 supports the Y-table 22 such that the Y-table 22 can move in the Y-axis direction.

The linear guide 27 supports the Z-table 23 such that the Z-table 23 can move in the Z-axis direction.

The ball screw 28 converts the rotational motion of the X-axis motor (not shown) to the linear motion in the X-axis direction and transmits the linear motion to the X-table 21.

The ball screw 29 converts the rotational motion of the Y-axis motor (not shown) to linear motion in the Y-axis direction and transmits the linear motion to the Y-table 22.

The ball screw 30 converts the rotational motion of the Z-axis motor (not shown) to linear motion in the Z-axis direction and transmits the linear motion to the Z-table 23.

The sensor 3a is an accelerometer (acceleration sensor) and provided in, on or near a main body of the linear guide 25, or is provided in, on or near a main body of the ball screw 28. The sensor 3a detects the vibration indicating the operating condition of the linear guide 25 and the ball screw 28, and sends the data of the vibration information of the detected vibration to the information collecting device 4. The sensor 3b is an accelerometer and provided in, on or near a main body of the linear guide 26, or is provided in, on or near a main body of the ball screw 29. The sensor 3b detects the vibration indicating the operating condition of the linear guide 26 and the ball screw 29, and sends the data of the vibration information of the detected vibration to the information collecting device 4. The sensor 3c is an accelerometer and provided in, on or near a main body of the linear guide 27, or is provided in, on or near a main body of the ball screw 30. The sensor 3c detects the vibration indicating the operating condition of the linear guide 27 and the ball screw 30, and sends the data of the vibration information of the detected vibration to the information collecting device 4. The sensor 3d is an accelerometer and provided in, on or near the spindle 24. The sensor 3d detects the vibration indicating the operating condition of the bearing 24a of the spindle 24 and sends the data of the vibration information of the detected vibration to the information collecting device 4. The data of the vibration information is operational state data indicating the operational state of the actuator. It should be noted that in the following description, each of the four sensors 3a, 3b, 3c, 3d may be referred to as the sensor 3 and the four sensors 3a, 3b, 3c, 3d may collectively be referred to as the sensors 3.

The information collection device 4 is connected to the information processing device 6 via a network 5. When the control unit 19 executes the state monitoring and diagnosis process, the information collecting device 4 obtains and collects the data of the vibration information from the sensors 3. The information collecting device 4 produces a data file based on the obtained data of the vibration information and transmits the data file to the information processing device 6 through the network 5.

The information processing device 6 stores a diagnosis program which is installed in advance. When the information processing device 6 receives the data file from the information collection device 4 through the network 5, the information processing device 6 executes the diagnostic program and generates a diagnostic result file based on the data file. The information processing device 6 stores the diagnostic result file in a storage unit (memory) within the information processing device 6 or in an external storage, and monitors and diagnoses the bearing 24a, the linear guides 25, 26, 27, and the ball screws 28, 29, 30. The storage unit provided inside the information processing device 6 or the external storage may be referred to as a storage device in this specification. It should be noted that the external storage may simply be referred to as the storage or the data storage.

### Operation of Machine Tool

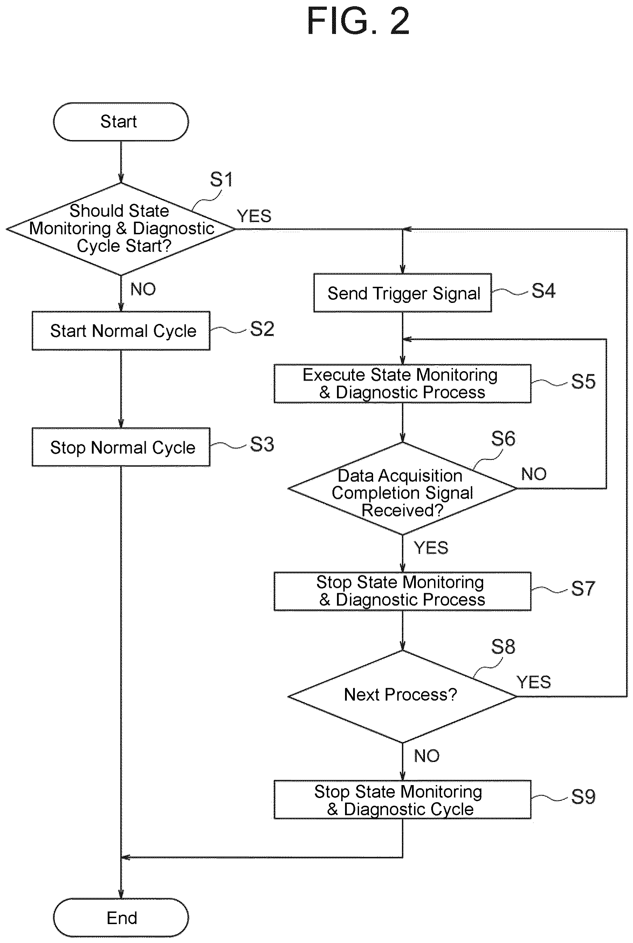

The operation of the machine tool 2 of the mechanical equipment monitoring system 1 according to the first embodiment of the present invention will be described in detail with reference to FIGS. 1 and 2.

The machine tool 2 starts the operation shown in FIG. 2 as a main power supply (not shown) is turned on.

First, the control unit 19 of the machine tool 2 determines whether to start a state monitoring and diagnostic cycle (Step S1).

If the state monitoring and diagnostic cycle should not start (Step S1: NO), the control unit 19 starts a normal cycle (Step S2). In the normal cycle, the control unit 19 actuates the X-table 21, the Y-table 22, the Z-table 23, the spindle 24, the linear guides 25, 26, 27 and the ball screws 28, 29, 30, and repeats the execution of the machining process a predetermined number of times.

Thereafter, the control unit 19 terminates the normal cycle (Step S3), and ends (exits from) the flowchart.

On the other hand, if the status monitoring and diagnostic cycle should start (Step S1: YES), the control unit 19 actuates the spindle 24, the linear guides 25, 26, 27, and the ball screws 28, 29, 30, and causes the communication unit 20 to generate a trigger signal. Then, the communication unit 20 sends the trigger signal to the information collecting device 4 (Step S4).

Next, the control unit 19 starts executing the state monitoring and diagnostic process (Step S5), and controls (brings) the spindle 24, the linear guides 25, 26, 27, and the ball screws 28, 29, 30 into a desired condition, i.e., a state suitable for monitoring.

Next, the control unit 19 determines whether or not a data acquisition completion signal has been received by the communication unit 20 (Step S6).

The control unit 19 returns to the operation of Step S5 if the communication unit 20 does not receive the data acquisition completion signal (Step S6: NO).

On the other hand, if the communication unit 20 receives the data acquisition completion signal (S6: YES), the control unit 19 determines whether there is a next state monitoring and diagnostic process to be carried out (Step S8).

The control unit 19 returns to the operation of Step S4 if there is the next state monitoring and diagnostics process (Step S8: YES).

On the other hand, if there is no next state monitoring and diagnostic process (Step S8: NO), the control unit 19 ends the state monitoring and diagnostic cycle (Step S9), and ends the flowchart.

### Operation of Information Collection Device

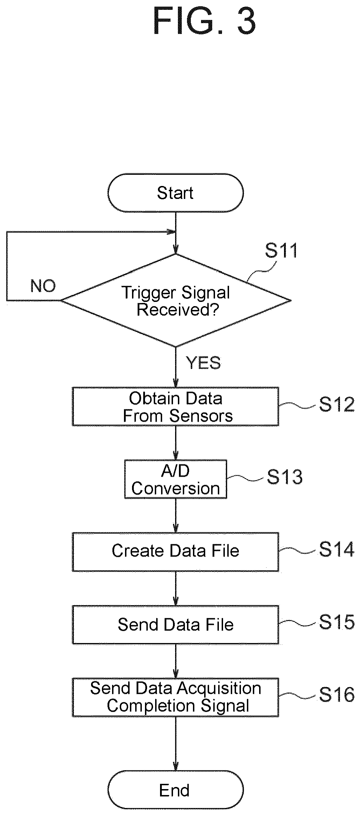

The operation of the information collecting device 4 of the mechanical equipment monitoring system 1 according to the first embodiment of the present invention will be described in detail with reference to FIGS. 1 and 3.

The information collecting device 4 starts the operation shown in FIG. 3 as the main power supply (not shown) is turned on.

First, the information collecting device 4 determines whether or not it has received the trigger signal from the machine tool 2 (Step S11).

The information collecting device 4 repeats the operation of Step S11 if the information collecting device 4 has not received the trigger signal (Step S11: NO).

On the other hand, if the information collecting device 4 has received the trigger signal (Step S11: YES), the information collecting device 4 obtains the data of the vibration information from the sensors 3 (Step S12).

Next, the information collecting device 4 performs A/D conversion of the data of the vibration information (Step S13).

Then, the information collecting device 4 generates the data file of the vibration information (Step S14).

Subsequently, the information collection device 4 transmits the data file to the information processing device 6 via the network 5 (Step S15).

When the information collecting device 4 completes the acquisition of the data of the vibration information sufficient for the state (condition) monitoring and the diagnosis, the information collecting device 4 transmits a data acquisition completion signal (i.e., a completion notice) to the machine tool 2 (Step S16), and ends the flowchart.

### Operation of Mechanical Equipment Monitoring System

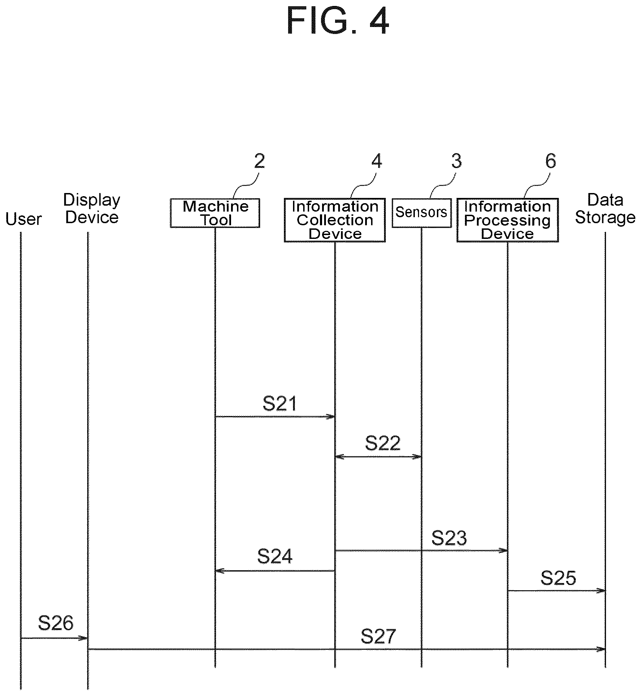

The operation of the mechanical equipment monitoring system 1 according to the first embodiment of the present invention will be described in detail with reference to FIGS. 1 and 4.

As the control unit 19 of the machine tool 2 starts the state monitoring and diagnosis cycle, the communication unit 20 of the machine tool 2 transmits the trigger signal to the information collecting device 4 under the control of the control unit 19 (Step S21). Further, the control unit 19 starts execution of the state monitoring and diagnostic process, and controls (brings) the spindle 24, the linear guides 25, 26, 27, and the ball screws 28, 29, 30 to a desired condition for monitoring (i.e., state suitable for monitoring).

After receiving the trigger signal, the information collecting device 4 obtains the output signals (detection results) of the sensors 3, A/D converts the obtained sensor signals, and generates the data file (Step S22).

Next, the information collection device 4 transmits the generated data file to the information processing device 6 (Step S23).

Subsequently, the information collecting device 4 transmits the data acquisition completion signal to the machine tool 2 (Step S24).

Next, the information processing device 6 generates the diagnosis result file based on the obtained data file, and stores the generated diagnosis result file in storage or the like (Step S25).

The mechanical facility monitoring system 1 repeats the operation from the Step S21 to Step S25 by repeating the execution of the state monitoring and diagnostic process a predetermined number of times until the completion of the state monitoring and diagnostic cycle.

A user of the monitoring system 1 operates a display device (not shown) connected to the information processing device 6 after the state monitoring and diagnosis cycle ends (Step S26).

Then, the display device reads the diagnosis result file from the storage and displays the diagnosis result on a screen of the display device, so that the user can view the diagnosis result file (Step S27).

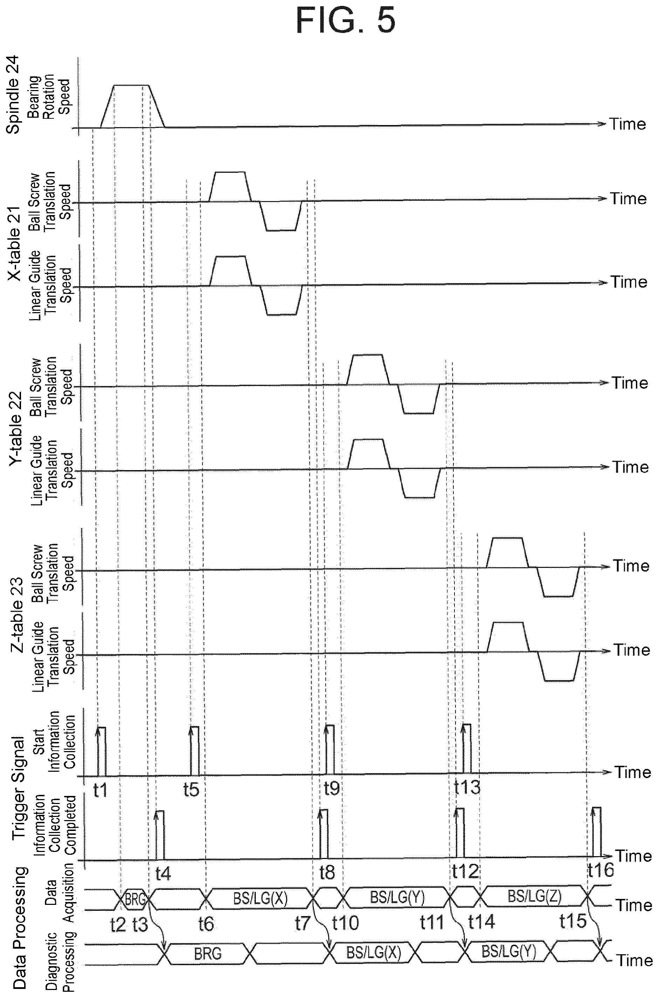

Now, the state monitoring and diagnosis cycle performed by the mechanical equipment monitoring system 1 according to the first embodiment of the present invention will be described in more detail with reference to FIG. 5.

At time t1, the communication unit 20 transmits the trigger signal to the information collecting device 4 under the control of the control unit 19. Further, the control unit 19 drives the spindle 24, the linear guides 25, 26, 27 and the ball screws 28, 29, 30 and starts the execution of the state monitoring and diagnosis process. This brings the spindle 24 into a desired condition (suitable condition) for monitoring, i.e., a suitable state for monitoring. Thus, the spindle 24 starts rotating from the rest and increases its speed (acceleration). Upon reaching a certain speed, the spindle 24 keeps a constant speed for a certain period, and then decreases its speed (deceleration) and stops.

At time t2, the information collecting device 4 starts acquiring the data of the vibrational information from the sensor 3.

At time t3, the information collecting device 4 ends acquiring the data of the vibrational information from the sensor 3. The information collecting device 4 generates a data file (BRG) on the basis of the obtained data of the vibrational information and transmits the data file (BRG) to the information processing device 6 (as indicated by the arrow extending downward on the right of t3 in FIG. 5).

At time t4, the information collecting device 4 transmits the data acquisition completion signal. The control unit 19 terminates the execution of the state monitoring and diagnosis process upon receiving the data acquisition completion signal.

At time t5, the communication unit 20 transmits the trigger signal to the information collecting device 4 under the control of the control unit 19. The control unit 19 starts the execution of the next state monitoring and diagnosis process, thereby bringing the linear guide 25 and the ball screw 28 of the X-table 21 into a desired condition for monitoring (state suitable for monitoring). Thus, the linear guide 25 and the ball screw 28 start the translational movements, respectively, such that they increase their speeds from the rest, keeps constant speeds for a certain period, and decrease their speeds to zero (deceleration to rest).

At time t6, the information collecting device 4 starts acquiring the data of the vibrational information from the sensor 3.

At time t7, the information collecting device 4 ends acquiring the data of the vibrational information from the sensor 3. The information collecting device 4 generates a data file (BS/LG(X)) based on the obtained data of the vibrational information and transmits the data file to the information processing device 6.

At time t8, the information collecting device 4 transmits a data acquisition completion signal. The control unit 19 terminates the execution of the state monitoring and diagnosis process upon receiving the data acquisition completion signal.

At time t9, the communication unit 20 transmits a trigger signal to the information collecting device 4 under the control of the control unit 19. The control unit 19 starts the execution of the next state monitoring and diagnosis process, and brings the linear guide 26 and the ball screw 29 of the Y-table 22 into a state suitable for monitoring (desired condition for monitoring). Thus, the linear guide 26 and the ball screw 29 start the translational movements. Specifically, the linear guide 26 and the ball screw 29 increase their speeds from the rest (acceleration), keep constant speeds for a certain period, and decrease their speeds to zero (deceleration to the rest).

At time t10, the information collecting device 4 starts acquiring the data of the vibrational information from the sensor 3.

At time t11, the information collecting device 4 ends acquiring the data of the vibrational information from the sensor 3. The information collecting device 4 generates a data file (BS/LG (Y)) based on the obtained data of the vibrational information and transmits the data file to the information processing device 6.

At time t12, the information collecting device 4 transmits a data acquiring completion signal. The control unit 19 terminates the execution of the state monitoring and diagnosis process upon receiving the data acquisition completion signal.

At time t13, the communication unit 20 transmits a trigger signal to the information collecting device 4 under the control of the control unit 19. Further, the control unit 19 starts the execution of a next state monitoring and diagnosis process, and brings the linear guide 27 and the ball screw 30 of the Z-table 23 into a state suitable for monitoring (desired condition for monitoring). Thus, the linear guide 27 and the ball screw 30 start the translational movements such that the linear guide 27 and the ball screw 30 increase their speed from the rest (acceleration), keep constant speeds for a certain period, and decrease their speeds to the rest (deceleration).

At time t14, the information collecting device 4 starts acquiring the data of the vibrational information from the sensor 3.

At time t15, the information collecting device 4 ends acquiring the data of the vibrational information from the sensor 3. The information collecting device 4 generates a data file (BS/LG (Z)) based on the obtained data of the vibrational information and transmits the data file to the information processing device 6.

At time t16, the information collecting device 4 transmits a data acquisition completion signal. Upon receiving the data acquisition completion signal, the control unit 19 terminates the execution of the state monitoring and diagnostic process and terminates the state monitoring and diagnostic cycle.

As described above, in this embodiment, the machine tool 2 includes the sensors 3, the actuators, and the communication unit 20 that transmits (generates) the respective trigger signal when the respective actuator is in a suitable state for the respective sensor 3 to detect/monitor the operating state of the respective actuator. Upon receiving the trigger signal from the communication unit 20, the data collection device 4 collects the data of the vibration information from the respective sensor 3, and then the information collection device 4 transmits the collected data of the vibration information. Then, the information processing device 6 monitors the actuator based on the data of the vibration information received from the information collection device 4. Thus, the machine tool 2 does not collect (receive) the data for the diagnosis of the machine tool 2, and the machine tool 2 having a simple configuration can be diagnosed.

Furthermore, in this embodiment, it is possible to carry out high-precision diagnosis by driving the actuators (24a, 24-30) at different timing (one by one) for respective status monitoring and diagnosis.

Further, in this embodiment, the trigger signal and the data acquisition completion signal are only transmitted and received between the machine tool 2 and the information collecting device 4. Therefore, when a modification is needed to a control program installed in the machine tool 2, an only minor modification is required.

Further, in this embodiment, the linear guides 25, 26, 27 and the ball screws 28, 29, 30 are included in the monitoring objects in addition to the bearing 24a. Thus, it is possible to monitor the machine tool 2 in more detail.

In this embodiment, the diagnosis result file is stored in the storage, but the embodiment is not limited thereto. Specifically, the diagnosis result file may be stored in a server on the network 5 or an on-premises server. Alternatively, the diagnosis result file may be stored in a local storage. If the diagnosis result file is stored in the local storage, the risk of information leakage can be reduced because the diagnosis result file is placed in a particular network under user's control.

In this embodiment, the mechanical equipment monitoring system 1 includes the machine tool 2, but the embodiment is not limited thereto. Specifically, the mechanical equipment monitoring system 1 may not include the machine tool 2.

### Second Embodiment

Since the configuration of the mechanical equipment monitoring system according to a second embodiment of the present invention is the same as that of FIG. 1, the description of the operation of the mechanical equipment monitoring system according to this embodiment is omitted. The second embodiment will be described using the reference numerals indicated in FIG. 1.

### Operation of Mechanical Equipment Monitoring System

The operation of the mechanical equipment monitoring system 1 according to the second embodiment of the present invention will be described in detail.

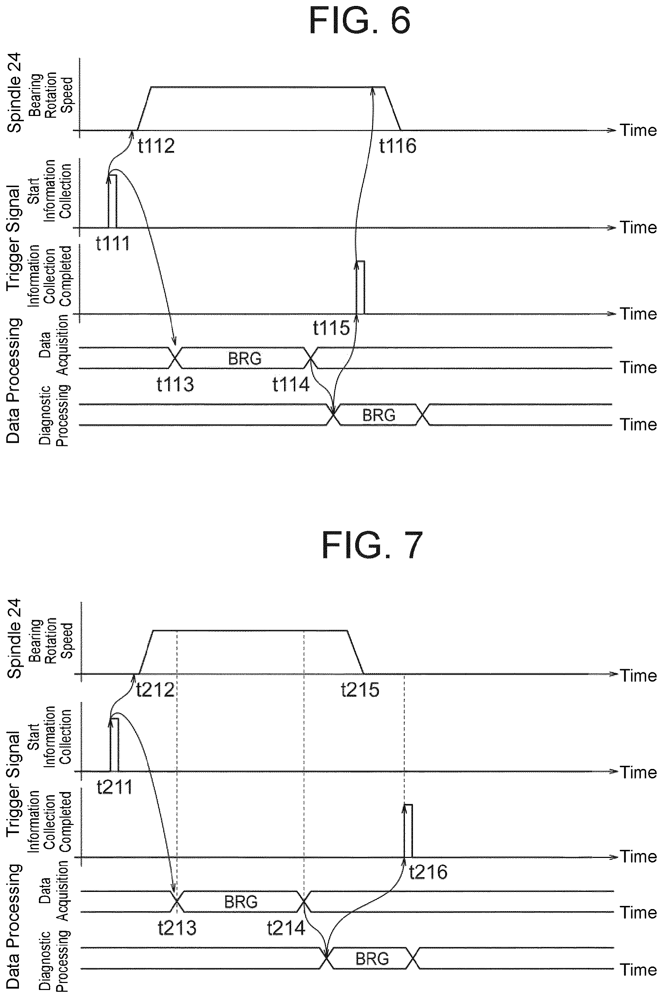

First, the operation of the mechanical equipment monitoring system 1 according to this embodiment will be described in detail with reference to FIG. 6.

At time t111, the communication unit 20 transmits a trigger signal to the information collecting device 4 under the control of the control unit 19. The control unit 19 drives only the spindle 24.

At time t112, the control unit 19 starts executing the state monitoring and diagnostics process to bring the spindle 24 into a suitable condition for monitoring (desired condition for monitoring). As a result, the spindle 24 increases its speed from the rest (acceleration), keeps a constant speed for a certain period, and decreases the speed to zero (deceleration to the rest).

At time t113, the information collecting device 4 starts acquiring the data of the vibrational information from the sensor 3 (3d).

At time t114, the information collecting device 4 finishes acquiring the data of the vibrational information from the sensor 3 and transmits the data file (BRG) to the information processing device 6.

At time t115, the information collecting device 4 transmits a data acquisition completion signal. Then, the communication unit 20 receives the data acquisition completion signal.

At time t116, the control unit 19 causes the spindle 24 to stop.

Subsequently, another operation of the mechanical equipment monitoring system 1 according to this embodiment will be described in detail with reference to FIG. 7.

At time t211, the communication unit 20 transmits a trigger signal to the information collecting device 4 under the control of the control unit 19. The control unit 19 drives only the spindle 24.

At time t212, the control unit 19 starts executing the state monitoring and diagnostics process to bring the spindle 24 into a desired condition for monitoring (state suitable for monitoring). As a result, the spindle 24 increases its speed from the rest (acceleration from the stopped state), keeps its speed for a certain period and then decreases its speed to zero (deceleration to the rest).

At time t213, the information collecting device 4 starts acquiring the data of the vibrational information from the sensor 3.

At time t214, the information collecting device 4 finishes acquiring the data of the vibrational information from the sensor 3 and transmits the data file (BRG) to the information processing device 6.

At time t215, the control unit 19 stops the spindle 24, without waiting for the reception of the data acquisition completion signal at the communication unit 20. Specifically, the control unit 19 stops the driving of the spindle 24 after a predetermined time has elapsed from the time t212 that started the control of bringing the spindle 24 into the suitable state for monitoring.

At time t216, the information collecting device 4 transmits a data acquisition completion signal. Then, the communication unit 20 receives the data acquisition completion signal.

As shown in FIG. 7, if sufficient data for the state monitoring and diagnosis of the spindle 24 has been obtained by the information collection device 4, the control unit 19 may stop the driving of the spindle 24 without waiting for the reception of the data acquisition completion signal at the communication unit 20. Even in this case, the control unit 19 starts the execution of the next state monitoring and diagnosis process upon receiving the data acquisition completion signal at the communication unit 20.

Thus, this embodiment drives only the spindle 24 while executing the state monitoring and diagnosing process, and therefore can achieve an additional advantage (accurate diagnosis of the bearing 24a) in addition to the above-described advantages of the first embodiment.

Further, this embodiment stops the driving of the actuator without waiting for the reception of the data acquisition completion signal, and therefore can achieve power saving.

In this embodiment, the diagnosis result file is stored in the storage, but the embodiment is not limited thereto. Specifically, the diagnosis result file may be stored in a server on the network 5 or an on-premises server. Alternatively, the diagnosis result file may be stored in a local storage. If the diagnosis result file is stored in the local storage, the risk of information leakage can be reduced because the diagnosis result file is placed in a particular network under the user's control.

In this embodiment, the mechanical equipment monitoring system 1 includes the machine tool 2, but the embodiment is not limited thereto, i.e., the mechanical equipment monitoring system 1 may not include the machine tool 2.

### Third Embodiment

Since the configuration of the mechanical equipment monitoring system according to a third embodiment of the present invention is the same as that of FIG. 1, description of the configuration of the mechanical equipment monitoring system is omitted. The operation of the mechanical equipment monitoring system of this embodiment will be described using the reference numerals shown in FIG. 1.

### Operation of Mechanical Equipment Monitoring System

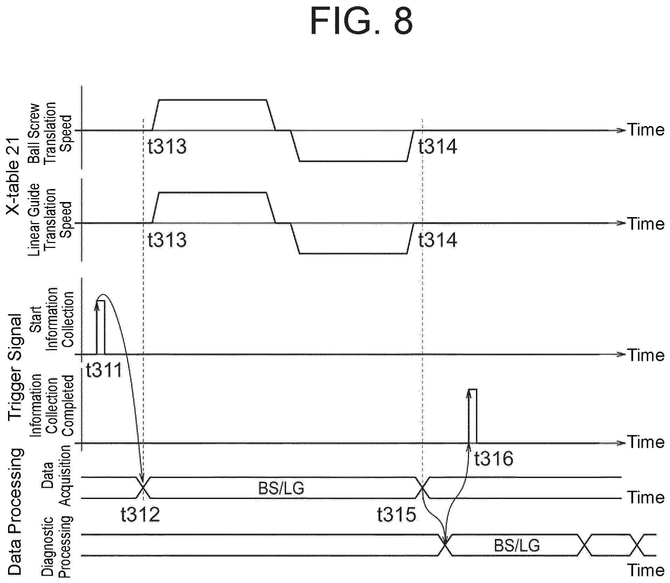

The operation of the mechanical equipment monitoring system 1 according to the third embodiment of the present invention will be described in detail with reference to FIG. 8.

At time t311, the communication unit 20 transmits a trigger signal to the information collecting device 4 under the control of the control unit 19. The control unit 19 drives only the linear guide 25 and the ball screw 28 of the X-table 21.

At time t312, the information collecting device 4 starts acquiring the data of the vibrational information from the sensor 3 (3a).

At time t313, the control unit 19 starts executing the state monitoring and diagnosis process to bring the linear guide 25 and ball screw 28 into a suitable condition for monitoring. Thus, the linear guide 25 and the ball screw 28 increase their speeds from the rest (acceleration from the rest), keep their speeds for a certain period and decrease their speeds to zero (deceleration to the rest).

At time t314, the driving of the linear guide 25 and the ball screw 28 is stopped by the control of the control unit 19.

At time t315, the information collecting device 4 finishes acquiring the data of the vibrational information from the sensor 3 and transmits the data file (BS/LG) to the information processing device 6.

At time t316, the information collecting device 4 transmits a data acquisition completion signal. Then, the communication unit 20 receives the data acquisition completion signal.

Thus, this embodiment executes the state monitoring and diagnosis process while driving only the linear guide 25 and the ball screw 28, and therefore can achieve an additional advantage (it is possible to accurately diagnose the linear guide 25 and the ball screw 28) in addition to the above-described advantages of the first embodiment.

In this embodiment, the diagnosis result file is stored in the storage, but the embodiment is not limited thereto, i.e., the diagnosis result file may be stored in a server on the network 5 or an on-premises server. Alternatively, the diagnosis result file may be stored in a local storage. If the diagnosis result file is stored in the local storage, the risk of information leakage can be reduced because the diagnosis result file is placed in a particular network under the user's control.

In this embodiment, the mechanical equipment monitoring system 1 includes the machine tool 2, but the embodiment is not limited thereto, i.e., the mechanical equipment monitoring system 1 may not include the machine tool 2.

### Fourth Embodiment

### Configuration of Mechanical Equipment Monitoring System

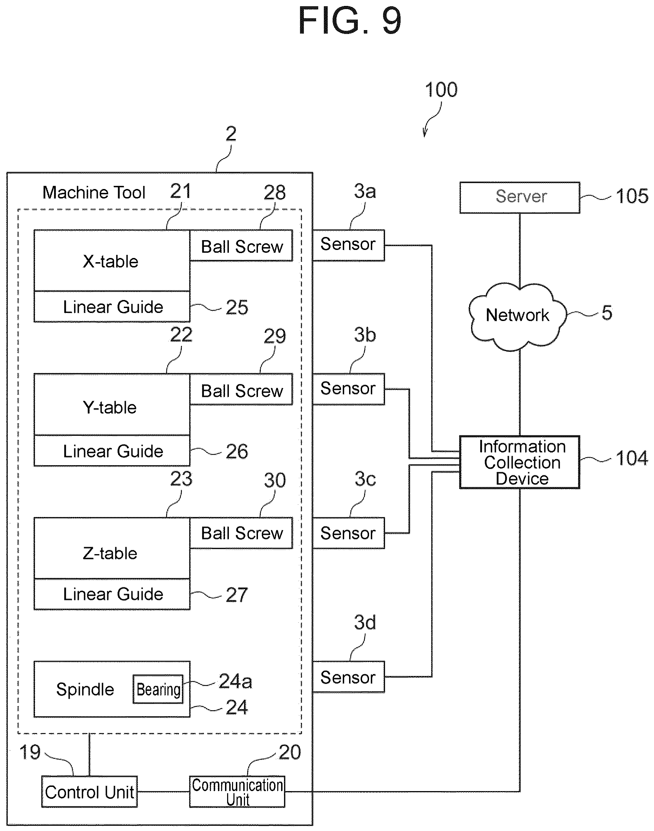

First, the configuration of the mechanical equipment monitoring system 1 according to the fourth embodiment of the present disclosure will be described in detail with reference to FIG. 9.

It should be noted that those portions which are shown in FIG. 9 and have the same configuration as FIG. 1 are denoted by the same reference numerals, and a description thereof will be omitted.

The mechanical equipment monitoring system 100 includes a machine tool 2, sensors 3 (3a-3d), an information collection device 104, and a server 105.

The communication unit 20 operates under the control of the control unit 19, and transmits and receives signals to and from the information collection device 104.

The sensors 3 detect vibrations of the bearing 24a, the linear guides 25, 26, 27 and the ball screws 28, 29, 30, and send the data of the vibration information of the detected vibrations to the information collection device 104.

The information collection device 104 stores a diagnostic program and is connected to the server 105 through the network 5. The information collection device 104 obtains data of vibration information from the sensors 3 when the control unit 19 executes the state monitoring and diagnosis process. The information collection device 104 generates a data file based on the obtained data of the vibration information and executes the stored diagnosis program to generate a diagnosis result file based on the data file. The information collection device 104 sends the generated diagnosis result file to the server 105 through the network 5 to store the diagnosis result file in the server 105.

The server 105 stores the diagnosis result file that is received from the information collection device 4.

Since the operation of the mechanical equipment monitoring system 100 is the same as that of FIGS. 4 and 5 except that the server 105 is provided instead of the information processing device 6, the description thereof will be omitted.

Thus, in this embodiment the diagnosis result file is generated by the information collecting device 104 so that an amount of data transmitted from the network 5 to the server 105 is reduced as compared with the first embodiment. Accordingly, this embodiment can achieve an additional advantage (the communication band (channel) of the network 5 is not crowded) in addition to the advantages of the first embodiment.

In this embodiment, the diagnostic result file is stored in the server 105 on the network 5. However, the diagnostic result file may be stored in an on-premises server or a storage. Alternatively, the diagnostic result file may be stored in a local storage. If the diagnostic result file is stored in the local storage, the risk of information leakage can be reduced because the diagnostic result file is placed in a particular network under the user's control.

In this embodiment, the mechanical equipment monitoring system 100 includes the machine tool 2, but the embodiment is not limited thereto, i.e., the mechanical equipment monitoring system may not include the machine tool 2.

### Fifth Embodiment

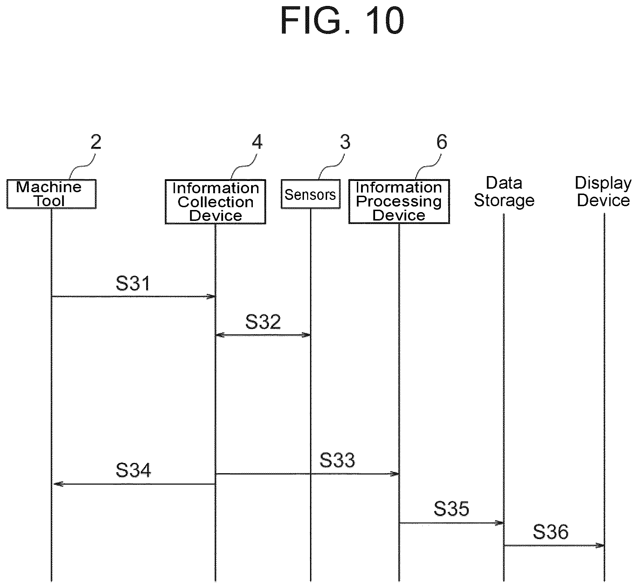

Since the configuration of the mechanical equipment monitoring system according to a fifth embodiment of the present invention is the same as that of FIG. 1, description of the configuration of the mechanical equipment monitoring system of the fifth embodiment will be omitted. Referring to FIG. 10, the operation of the mechanical equipment monitoring system according to this embodiment will be described using the reference numerals shown in FIG. 1.

### Operation of Mechanical Equipment Monitoring System

After the control unit 19 of the machine tool 2 starts a normal cycle to start executing a machining process, the communication unit 20 of the machine tool 2 sends a trigger signal to the information collecting device 4 under the control of the control unit 19 while the machining process being carried out with the spindle 24, the linear guide 25, the linear guide 26, the liner guide 27, the ball screw 28, the ball screw 29 or the ball screw 30 when the spindle 24, the linear guide 25, the linear guide 26, the linear guide 27, the ball screw 28, the ball screw 29 or the ball screw 30 becomes a suitable state for monitoring (Step S31).

Next, upon receiving the trigger signal, the information collecting device 4 starts obtaining the data of the vibration information from the sensor 3 to generate a data file (Step S32).

Then, the information collection device 4 transmits the generated data file to the information processing device 6 (Step S33).

Next, the information collecting device 4 transmits the data acquisition completion signal to the machine tool 2 (Step S34).

Subsequently, the information processing device 6 generates a diagnosis result file based on the obtained data file, and stores the generated diagnosis result file in the storage (Step S35).

Next, the display device reads the diagnosis result file from the storage and displays the diagnosis result file on a screen of the display device, so that the user can view the diagnosis result file (Step S36).

Thus, this embodiment can achieve additional advantage in addition to the advantages of the above-described first embodiment. Specifically, this embodiment eliminates the need to execute a state monitoring and diagnosis cycle that is different from the normal cycle, i.e., it is not necessary to carry out a separate cycle dedicated for diagnosis. Accordingly, it is possible to implement the state monitoring and diagnosis without impairing the productivity of the machine tool 2.

In this embodiment, the diagnosis result file is stored in the storage, but the embodiment is not limited thereto. Specifically, the diagnosis result file may be stored in a server on the network 5 or an on-premises server. Alternatively, the diagnostic result file may be stored in a local storage. If the diagnostic result file is stored in the local storage, the risk of information leakage can be reduced because the diagnostic result file is placed in a particular network under the user's control.

In this embodiment, the mechanical equipment monitoring system 1 includes the machine tool 2, but the embodiment is not limited thereto, i.e., the mechanical equipment monitoring system 1 may not include the machine tool 2.

### Sixth Embodiment

In the first embodiment to the fifth embodiment, the vibrations of the actuator are detected by the sensor 3 (the first sensor), which is an acceleration sensor, to perform abnormality diagnosis of the machine tool 2, but the sensor used for abnormality diagnosis of the machine tool 2 is not limited to the acceleration sensor. Sensors other than the acceleration sensor may be used to detect the operating state of the actuator of the machine tool 2 and perform abnormality diagnosis of the machine tool 2. Such a configuration will be described in a sixth embodiment.

### Configuration of Mechanical Equipment Monitoring System

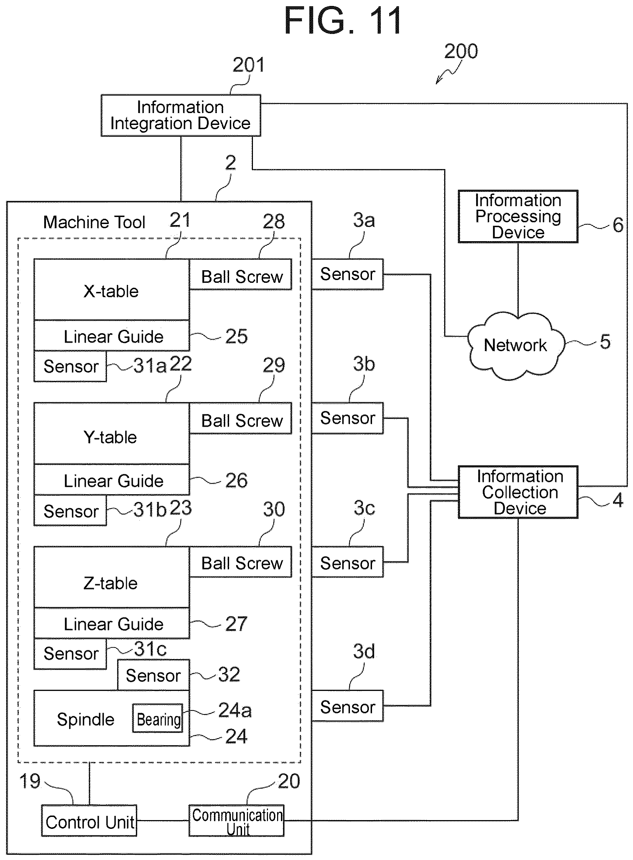

The configuration of a mechanical equipment monitoring system 200 according to the sixth embodiment of the present disclosure will be described in detail with reference to FIG. 11. It should be noted that those portions which are shown in FIG. 11 and have the same configuration as FIG. 1 are denoted by the same reference numerals, and a description thereof will be omitted.

The mechanical equipment monitoring system 200 includes a machine tool 2, sensors 3a, 3b, 3c, 3d, an information collecting device 4, an information processing device 6, and an information integration device (additional controller) 201.

The machine tool 2 includes a control unit 19, a communication unit 20, an X-table 21, a Y-table 22, a Z-table 23, a spindle 24, linear guides 25, 26, 27, ball screws 28, 29, 30, and sensors 31a, 31b, 31c, 32.

The sensor 31a is provided in, on or near a main body of the linear guide 25, or is provided in, on or near a main body of the ball screw 28. The sensor 31a is a current sensor for detecting a value of an electric current or a temperature sensor for detecting a temperature. It should be noted that the sensor 31a may be a sensor capable of detecting both the current value and temperature. Alternatively, the sensor 31a may be a set of two sensors (i.e., one sensor 31a detects the current value, and the other sensor 31a detects the temperature). The sensor 31b is provided in, on or near a main body of the linear guide 26, or is provided in, on or near a main body of the ball screw 29. The sensor 31b is a current sensor for detecting a value of electric current or a temperature sensor for detecting a temperature. The sensor 31b may be a sensor capable of detecting both the current value and temperature. Alternatively, the sensor 31b may be a set of two sensors (i.e., one sensor 31b detects the current value, and the other sensor 31b detects the temperature). The sensor 31c is provided in, on or near a main body of the linear guide 27, or is provided in, on or near a main body of the ball screw 30. The sensor 31c is a current sensor for detecting a value of electric current or a temperature sensor for detecting a temperature. The sensor 31c may be a sensor capable of detecting both the current value and temperature. Alternatively, the sensor 31c may be a set of two sensors (i.e., one sensor 31c detects the current value, and the other sensor 31c detects the temperature). Each of the sensors 31a, 31b, 31c sends data of the detected current and/or data of the detected temperature to the information integration device 201. In the following description, each of the sensors 31a, 31b, 31c may be referred to as a sensor 31 (second sensor) or the three sensors 31a, 31b, 31c may be referred to as sensors (second sensors) 31.

The sensor 32 (third sensor) is provided in, on or near a main body of the spindle 24. The sensor 32 is a rotational speed sensor for detecting a rotational speed of the spindle 24. The sensor 32 sends data of the detected rotational speed to the information integration device 201.

The information collecting device 4 generates a data file based on the obtained data of the vibration information and transmits the data file to the information integration device 201.

The information integration device 201 is connected to the information processing device 6 via the network 5. The information integration device 201 may be a PLC (Programmable Logic Controller). The information integration device 201 has a timer for producing and transmitting time information. The information integration device 201 controls the overall operations of the machine tool 2, obtains the data of the current value and/or temperature from the sensor(s) 31, and obtains the data of the rotational speed from the sensor 32. The information integration device 201 allots (attaches) the time information to the data file received from the information collecting device 4 and also allots the time information to the overall data (integration data) about the rotation speed, the current value and/or the temperature obtained from the sensors 31, 32. The information integration device 201 transmits the data file to which the time information is allotted and the overall data to which the time information is allotted, to the information processing device 6 through the network 5.

Upon receiving the data file (including time information) and the overall data/integration data (including time information) from the information integration device 201 through the network 5, the information processing device 6 executes the diagnostic program stored in the information processing device 6 and generates the diagnosis result file based on the data file and the overall data/integration data.

### Operation of Mechanical Equipment Monitoring System

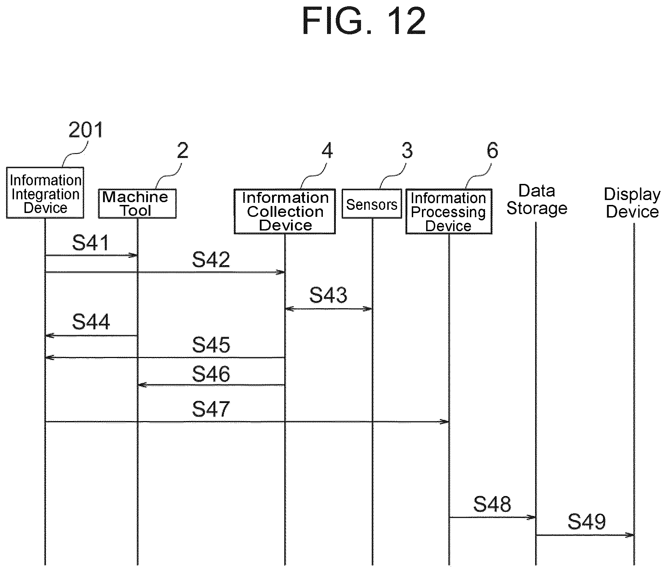

The operation of the mechanical equipment monitoring system 200 according to the sixth embodiment of the present disclosure will be described in detail with reference to FIGS. 11 and 12.

First, the information managing device 201 transmits a first trigger signal to the machine tool 2 (Step S41), and transmits a second trigger signal to the information collecting device 4 (Step S42). When the machine tool 2 receives the first trigger signal, the control unit 19 of the machine tool 2 starts the state monitoring and diagnosis cycle, and starts the execution of the state monitoring and diagnosis process to bring the spindle 24, the linear guides 25, 26, 27 and the ball screws 28, 29, 30 to a suitable condition for monitoring (desired condition for monitoring).

Upon receiving the second trigger signal, the information collecting device 4 starts obtaining the data of the vibration information from the sensors 3 to generate a data file (Step S43).

Next, the information integration device 201 controls the overall operations/movements of the machine tool 2, obtains data of the current value and/or temperature from the sensors 31 of the machine tool 2, and obtains data of the rotational speed from the sensor 32 of the machine tool 2 (Step S44).

Next, the information collecting device 4 transmits the generated data file to the information integration device 201 (Step S45).

Next, the information collecting device 4 transmits the data acquisition completion signal to the machine tool 2 (Step S46).

Next, the information integration device 201 transmits to the information processing device 6 the data file, which is received from the information collecting device 4, and the overall data (integration data) related to the current value and/or the temperature and the rotational speed, which is received from the machine tool 2 (Step S47).

Next, the information processing device 6 generates a diagnosis result file based on the obtained (received) data file and the overall data/integration data, and stores the generated diagnosis result file in the storage (Step S48).

Next, the display device reads the diagnosis result file from the storage and displays the diagnosis result on a screen of the display device, so that the user can view the diagnosis result file (Step S49).

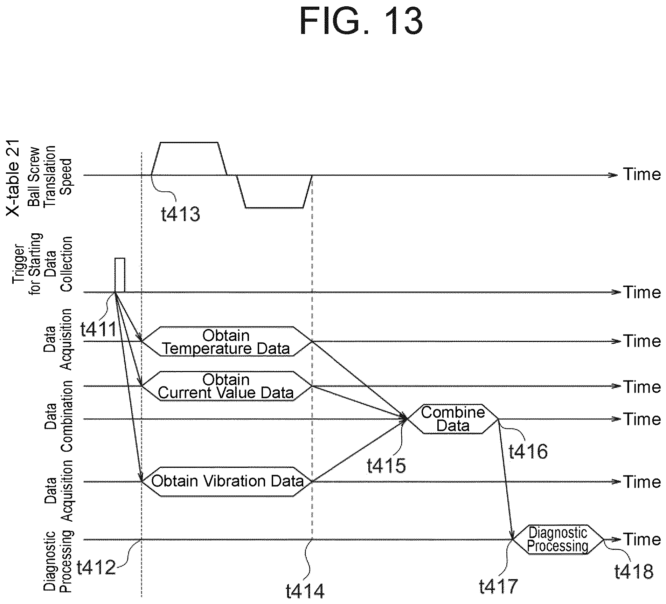

Now, the operation of the mechanical equipment monitoring system 200 according to the sixth embodiment of the present disclosure will be described in more detail with reference to FIG. 13. FIG. 13 shows a situation in which the information integration device 201 obtains data of the current value and the temperature, but does not obtain data of the rotational speed. Further, FIG. 13 shows a situation in which only the ball screw 28 of the X-table 21 operates.

At time t411, the information integration device 201 transmits a trigger signal (three arrows extending diagonally downward to the right) to the machine tool 2 and the information collecting device 4, respectively.

At time t412, when the machine tool 2 receives the trigger signal from the information integration device 201, the sensors 31 start obtaining the current value and temperature data. Thereafter, the information integration device 201 obtains the data of the current value and temperature from the machine tool 2 (sensors 31). Also, at the time t412, upon receiving the trigger signal from the information integration device 201, the information collecting device 4 starts acquiring the data of the vibration information from the sensors 3.

At time t413, the ball screw 28 of the X-table 21 of the machine tool 2 starts a single translational operation (one reciprocating movement that includes one forward movement and one backward movement (returning movement)).

At time t414, the ball screw 28 of the X-table 21 of the machine tool 2 ends the translational operation (one reciprocating movement). Further, at the time t414, the information integration device 201 terminates the acquisition of the current value and temperature data from the sensors 31. In addition, at the time t414, the information collecting device 4 finishes acquiring the data of the vibration information from the sensors 3, generates a data file based on the obtained data of the vibration information and sends the generated data file to the information integration device 201.

At time t415, the information integration device 201 starts a data combining process in which the overall data (integrated data) about the current value and the temperature obtained from the sensors 31 and the data file obtained from the information collecting device 4 are combined. In the data combining process, the integration data and the data file are synchronized with each other based on the time information of the integration data and the time information of the data file.

At time t416, the information managing device 201 terminates the data combining process and sends the combined data (data file and the integration data) to the information processing device 6.

At time t417, the information processing device 6 starts a diagnostic process based on the obtained data file and the integration data.

At time t418, the information processing device 6 ends the diagnosis process.

Thus, this embodiment can provide an additional advantage in addition to the advantages of the first embodiment. Specifically, the sixth embodiment can perform diagnosis of the machine tool 2 using the data of the vibration information in the data file and the overall/integration data (data of the current value, temperature and rotational speed), so that it is possible to perform more accurate diagnosis. Further, since the information integration device 201 of this embodiment combines the detection data of the sensors 3, the detection data of the sensors 31, and the detection data of the sensor 32 and then sends the combined data to the network 5 and the information processing device 6 through a single transmission line, this embodiment is advantageous in terms of efficiency and safety of data transmission.

In this embodiment, the mechanical equipment monitoring system 200 includes the machine tool 2, but the mechanical equipment monitoring system 200 may not include the machine tool 2. If the mechanical equipment monitoring system 200 does not include the machine tool 2, the sensors 31 and the sensor 32 are provided outside the machine tool 2.

In this embodiment, the information integration device 201 obtains the data of the current value, the temperature, and the rotational speed, but information integration device 201 may obtain one or two of the current value data, the temperature data and the rotational speed data.

### Seventh Embodiment

Similar to the foregoing embodiment, the abnormality diagnosis of the machine tool 2 in this embodiment is performed by using the acceleration sensors and the sensors other than the acceleration sensors. In this embodiment, however, the information collection device 4 performs combining of data.

### Configuration of Mechanical Equipment Monitoring System

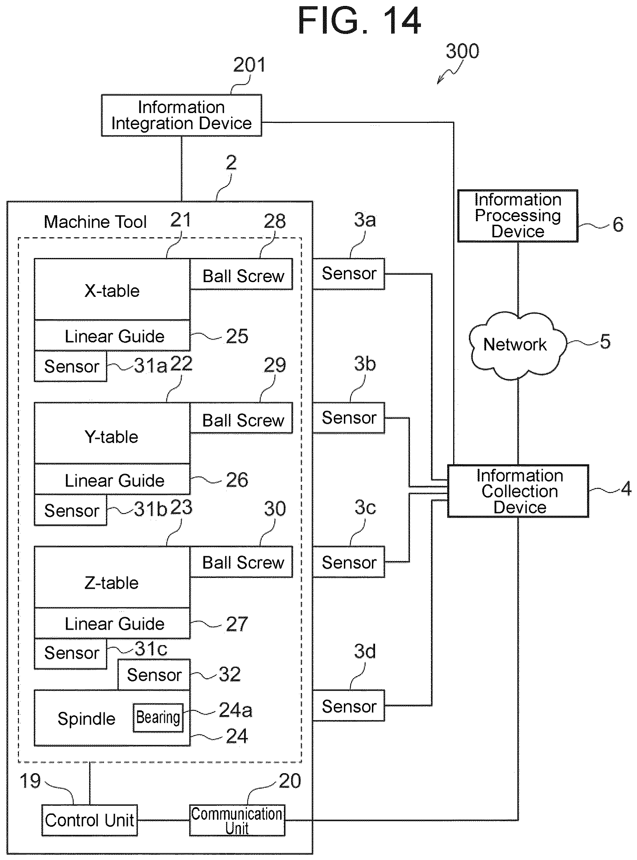

The configuration of a mechanical equipment monitoring system 300 according to the seventh embodiment of the present disclosure will be described in detail with reference to FIG. 14. It should be noted that those portions in FIG. 14 which have the same configuration as FIG. 1 are denoted by the same reference numerals, and a description thereof will be omitted.

The mechanical equipment monitoring system 300 includes a machine tool 2, sensors 3a, 3b, 3c, 3d, an information collecting device 4, an information processing device 6, and an information integrating device 201.

The machine tool 2 includes a control unit 19, a communication unit 20, an X-table 21, a Y-table 22, a Z-table 23, a spindle 24, linear guides 25, 26, 27, ball screws 28, 29, 30, and sensors 31 (31a-31c), 32.

The sensor 31a is provided in, on or near a main body of the linear guide 25, or is provided in, on or near a main body of the ball screw 28. The sensor 31a is a current sensor for detecting a current value or a temperature sensor for detecting a temperature. It should be noted that the sensor 31a may be a sensor capable of detecting both the current value and temperature. Alternatively, the sensor 31a may be a set of two sensors (i.e., one sensor 31a detects the current value, and the other sensor 31a detects the temperature). The sensor 31b is provided in, on or near a main body of the linear guide 26, or in, on or near a main body of the ball screw 29. The sensor 31b is a current sensor for detecting a current value or a temperature sensor for detecting a temperature. It should be noted that the sensor 31b may be a sensor capable of detecting both the current value and temperature. Alternatively, the sensor 31b may be a set of two sensors (i.e., one sensor 31b detects the current value, and the other sensor 31b detects the temperature). The sensor 31c is provided in, on or near a main body of the linear guide 27, or in, on or near a main body of the ball screw 30. The sensor 31c is a current sensor for detecting a current value or a temperature sensor for detecting a temperature. It should be noted that the sensor 31c may be a sensor capable of detecting both the current value and temperature. Alternatively, the sensor 31c may be a set of two sensors (i.e., one sensor 31c detects the current value, and the other sensor 31c detects the temperature). Each of the sensors 31a, 31b, 31c sends the detected current or/and thermal data to the information integration device 201. In the following description, each of the sensors 31a, 31b, 31c may be referred to as the sensor 31, or the sensors 31a, 31b and 31c may be referred to as the sensors 31.

The sensor 32 is provided in, on or near a main body of the spindle 24. The sensor 32 is a rotational speed sensor for detecting the rotational speed of the spindle 24. The sensor 32 sends the data of the detected rotational speed to the information integration device 201.

The information integration device 201 is, for example, a PLC (Programmable Logic Controller). The information integration device 201 controls the overall operations of the machine tool 2 to obtain the data of the current value and/or temperature from the sensors 31 and obtain the data of the rotational speed from the sensor 32. The information integration device 201 sends to the information collecting device 4 the integration data, which includes the obtained current value and/or temperature and the rotational speed.

The information collection device 4 is connected to the information processing device 6 via a network 5. The information collecting device 4 has a timer to generate and issue time information. The information collecting device 4 generates a data file based on data of vibration information obtained from the sensors 3 and allots (attaches) the time information to the generated data file. The information collecting device 4 allots time information to the integration data received from the information integration device 201. The information collection device 4 sends the integration data (including the time information) and the generated data file (including the time information) to the information processing device 6 through the network 5.

Upon receiving the data file and the integration data from the information collection device 4 through the network 5, the information processing device 6 executes a diagnostic program stored in the information processing device 6 and generates a diagnosis result file based on the data file and the integration data.

### Operation of Mechanical Equipment Monitoring System

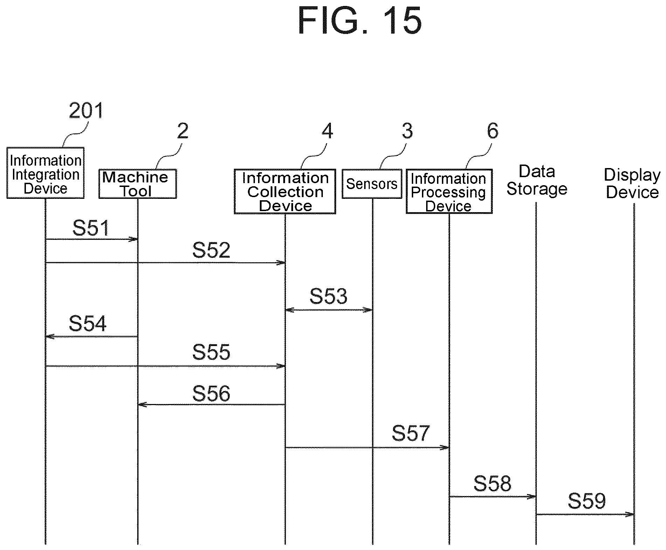

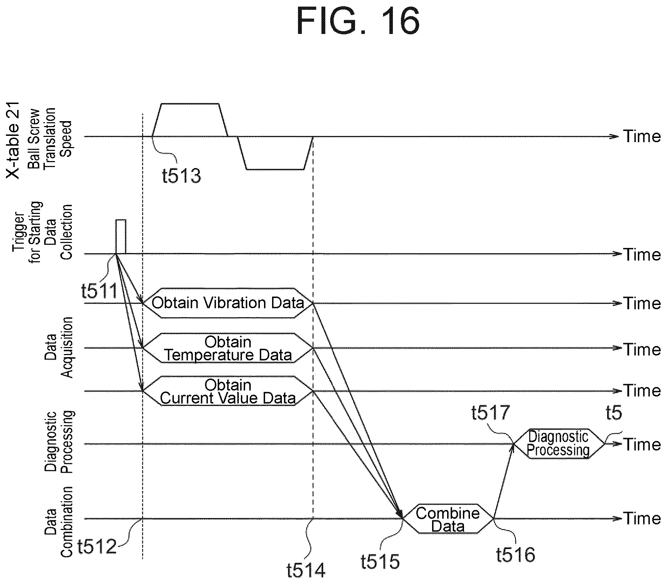

The operation of the mechanical equipment monitoring system 300 according to the seventh embodiment of the present disclosure will be described in detail with reference to FIGS. 15 and 16.

First, the information integration device 201 transmits a first trigger signal to the machine tool 2 (Step S51), and transmits a second trigger signal to the information collecting device 4 (Step S52). As the machine tool 2 receives the first trigger signal, the control unit 19 of the machine tool 2 starts a state monitoring and diagnosis cycle, and starts the execution of the state monitoring and diagnosis process to bring the spindle 24, the linear guides 25, 26, 27 and the ball screws 28, 29, 30 into a suitable condition for monitoring.

Upon receiving the second trigger signal, the information collecting device 4 starts obtaining the data of the vibration information from the sensors 3 to generate a data file (Step S53).

Next, the information integration device 201 controls the overall operations of the machine tool 2 to obtain data of the current value and/or temperature from the sensors 31 of the machine tool 2, and obtain data of the rotational speed from the sensor 32 of the machine tool 2 (Step S54).

Next, the information integration device 201 transfers the integration data, which includes the current value data and/or the temperature data and the rotational speed data, to the information collecting device 4 (Step S55).

The information collecting device 4 transmits a data acquisition completion signal to the machine tool 2 upon completing the acquisition of the data of the vibration information (Step S56).

Next, the information collection device 4 transmits to the information processing device 6 the data file and the integration data received from the information integration device 201 (Step S57).

Next, the information processing device 6 generates a diagnosis result file based on the data file and the integration data, and stores the generated diagnosis result file in a storage. (Step S58)

Next, the display device reads the diagnosis result file from the storage and displays the diagnosis result on a screen of the display device, so that the user can view the diagnosis result file (Step S59).

Now, the operation of the mechanical equipment monitoring system 300 according to the seventh embodiment of the present disclosure will be described in more detail with reference to FIG. 16. It should be noted that FIG. 16 shows a situation in which the information integration device 201 obtains the data of the current value and temperature, does not obtain the data of the rotational speed. Further, FIG. 16 shows a situation in which only the ball screw 28 of the X-table 21 operates.

At time t511, the information integration device 201 transmits trigger signals (three arrows extending diagonally downward to the right) to the machine tool 2 and the information collecting device 4.

At time t512, as the machine tool 2 receives the trigger signal from the information integration device 201, the sensors 31 (31a-31c) start acquiring the current value and temperature data. Then, the information collecting device 4 obtains the data of the current value and temperature from the machine tool 2 (sensors 31). Further, at the time t512, as the information collecting device 4 receives the trigger signal from the information integration device 201, the information collecting device 4 starts acquiring the data of the vibration information from the sensors 3 (3a-3c).

At time t513, the ball screw 28 of the X-table 21 of the machine tool 2 starts a single translational operation (one reciprocating movement that includes one forward movement and one backward movement (returning movement)).

At time t514, the ball screw 28 of the X-table 21 of the machine tool 2 ends the translational movement (one reciprocating movement). Further, at the time t514, the information integration device 201 terminates the acquisition of the data of the current value and the temperature from the sensors 31, and sends the integration data, which includes the current value and the temperature, to the information collection device 4. Also, at the time t514, the information collecting device 4 finishes acquiring data of the vibrational information from the sensors 3 and generates a data file.

At time t515, the information collecting device 4 starts a data combining process to combine the integration data obtained from the information integration device 201 with the data file generated by the information collecting device 4. In the data combining process, the integration data is synchronized with the data file based on the time information of the integration data and the time information of the data file.

At time t516, the information collection device 4 terminates the data combining process and sends the combined data, which includes the data file and the integration data, to the information processing device 6.

At time t517, the information processing device 6 starts the diagnostic process based on the data file and the integration data.

At time t518, the information processing device 6 ends the diagnosis process.

Thus, this embodiment has an additional advantage in addition to the advantages of the first embodiment. Specifically, since this embodiment can perform diagnosis of the machine tool 2 using the data of the vibration information of the data file and the integration data, which include data of the current value, temperature, and rotational speed, it is possible to perform more accurate diagnosis. Further, in this embodiment, the detection data of the sensors 3, the detection data of the sensors 31, and the detection data of the sensor 32 are combined in the information collecting device 4, and then the combined data is transmitted to the network 5 and the information processing device 6 through one transmission line. Thus, it is advantageous in terms of efficiency and safety of data transmission.

In this embodiment, the mechanical equipment monitoring system 300 includes the machine tool 2, but the mechanical equipment monitoring system 300 may not include the machine tool 2. If the mechanical equipment monitoring system does not include the machine tool 2, the sensors 31 and the sensor 32 may be provided outside the machine tool 2.

Further, in this embodiment, the information integration device 201 obtains the current value data, the temperature data and the rotational speed data, but the information integration device 201 may obtain one or two of the current value data, the temperature data and rotational speed data.

In the first to seventh embodiments, the spindle 24, the linear guides 25, 26, 27, and the ball screws 28, 29, 30 are diagnosed, but the objects to be diagnosed are not limited to them. For example, one or more actuators other than the spindle 24, the linear guides 25, 26, 27 and the ball screws 28, 29, 30 may be diagnosed.

In the first to seventh embodiments, the vibrations, the current values, the temperature and the rotational speed of the actuators are detected by the sensors 3, 31, 32, but the operating states (conditions) of the actuators other than the vibrations, the current values, the temperature and the rotational speed may be detected by sensors other than the sensors 3, 31, 32, and detection results may be utilized for diagnosis of the machine tool (mechanical equipment) 2.

The first to seventh embodiments may be appropriately combined as long as a resulting combination (resulting embodiment) does not contradict. For example, the mechanical equipment monitoring system 100 of FIG. 9 may be provided with the sensors 31 (31a~31c), 32 and the information integration device 201. In this combination, the information collecting device 104 performs diagnosis and monitoring of the machine tool 2 based on the detection data of the sensors 3, 31, 32.

Although specific embodiments have been described above, these embodiments are merely illustrative and do not intend to limit the scope of the invention. The devices, apparatus and methods described herein may be embodied in other forms than those described above. In addition, omissions, substitutions, changes and modifications may be made to the above-described embodiments under given conditions without departing from the scope of the present invention. Such omitted, substituted, changed and modified forms are included in the scope of the claims or their equivalents, and fall within the technical scope of the invention.

### REFERENCE NUMERALS AND SYMBOLS

1 Mechanical equipment monitoring system
2 Machine tool
3 Sensor (first sensor)
4 Information collection device
5 Network
6 Information processing device
19 Control unit
20 Communication unit
21 X-table
22 Y-table
23 Z-table
24 Spindle
24a Bearing
25 Linear guide
26 Linear guide
27 Linear guide
28 Ball screw
29 Ball screw
30 Ball screw
31 Sensor (second sensor)
32 Sensor (third sensor)
100 Mechanical equipment monitoring system
104 Information collection device
105 Server

## Claims

1. A mechanical equipment monitoring system comprising:
a sensor;
a mechanical equipment including an actuator and a communication unit, the communication unit configured to send a trigger signal when the actuator is in a suitable condition for the sensor to detect an operational state of the actuator;
an information collection device for collecting from the sensor operational state data that indicates the operational state detected by the sensor upon receiving the trigger signal from the communication unit; and
an information processing device for monitoring the actuator based on the operational state data collected by the information collection device.

2. The mechanical equipment monitoring system according to claim 1, wherein the suitable condition is a state in which the actuator is operated at a constant speed over a predetermined period, a state in which the actuator accelerates to a certain speed from a stop, keeps the certain speed over a predetermined period and then decelerates to stop, a state in which an amount of variation in a load applied to the actuator is equal to or less than a predetermined value, or a state in which an amount of variation in temperature of the actuator is equal to or less than a preset value.

3. The mechanical equipment monitoring system according to claim 1 or 2, wherein the mechanical equipment has a control unit for controlling the actuator so that the actuator is brought into the suitable condition.

4. The mechanical equipment monitoring system according to claim 3, wherein the information collection device sends a completion notification to the mechanical equipment upon completion of collection of the operational state data,
the communication unit receives the completion notification, and
the control unit stops controlling of the actuator in a manner to bring the actuator in the suitable condition as the communication unit receives the completion notification.

5. The mechanical equipment monitoring system according to claim 3, wherein the control unit stops controlling of the actuator in a manner to bring the actuator in the suitable condition when a predetermined times elapses from starting of control to bring the actuator in the suitable condition.

6. The mechanical equipment monitoring system according to claim 3, wherein the mechanical equipment has a plurality of types of actuators, and
the control unit controls only one actuator among the plurality of types of actuators so that said only one actuator is brought into the suitable condition, and stops operations of the remaining actuators.

7. The mechanical equipment monitoring system according to claim 6, wherein the actuator includes at least one of a bearing, a ball screw and a linear guide.

8. The mechanical equipment monitoring system according to claim 1 or 2, wherein the communication unit sends the trigger signal when the actuator is brought in the suitable condition during machining with the actuator.

9. The mechanical equipment monitoring system according to claim 1 or 2 further comprising a storage device for storing a result of monitoring of the actuator by the information processing device.

10. The mechanical equipment monitoring system according to claim 1 or 2, wherein the sensor is an acceleration sensor that detects vibrations of the actuator, and the operational state data is vibration data of the actuator.

11. The mechanical equipment monitoring system according to claim 1 or 2, wherein the sensor is a first sensor for detecting vibrations of the actuator,
the mechanical equipment monitoring system further includes:
a second sensor for detecting a current value of the actuator and/or temperature of the actuator; and
an information integration device for obtaining detection data of the second sensor,
the information integration device obtains detection data of the first sensor from the information collection device, and sends the detection data of the first sensor and the detection data of the second sensor to the information processing device in a time-synchronized manner, and
the information processing device monitors the actuator based on the detection data of the first sensor and the detection data of the second sensor.

12. The mechanical equipment monitoring system according to claim 11 further including a third sensor for detecting a rotational speed of the actuator, and wherein
the information integration device obtains detection data of the third sensor, and sends the detection data of the first sensor, the detection data of the second sensor and the detection data of the third sensor to the information processing device in a time-synchronized manner, and
the information processing device monitors the actuator based on the detection data of the first sensor, the detection data of the second sensor, and the detection data of the third sensor.

13. The mechanical equipment monitoring system according to claim 1 or 2, wherein the sensor is a first sensor for detecting vibrations of the actuator,
the mechanical equipment monitoring system further includes:
a second sensor for detecting a current value and/or temperature of the actuator; and
an information integration device for obtaining detection data of the second sensor,
the information collection device obtains detection data of the second sensor from the information integration device, and sends the detection data of the first sensor and the detection data of the second sensor to the information processing device in a time-synchronized manner, and
the information processing device monitors the actuator based on the detection data of the first sensor and the detection data of the second sensor.

14. The mechanical equipment monitoring system according to claim 11 further including a third sensor for detecting rotational speed of the actuator, and wherein
the information integration device obtains the detection data of the third sensor, and sends the detection data of the second sensor and the detection data of the third sensor to the information collecting device in a time- synchronized manner, and
the information collection device sends the detection data of the first sensor, the detection data of the second sensor, and the detection data of the third sensor to the information processing device in a time-synchronized manner, and
the information processing device monitors the actuator based on the detection data of the first sensor, the detection data of the second sensor, and the detection data of the third sensor.

15. A mechanical equipment monitoring system comprising:
a sensor;
a mechanical equipment including an actuator and a communication unit that transmits a trigger signal when the actuator is in a suitable condition for the sensor to detect an operational state of the actuator;
an information collecting device that collects, from the sensor, operational state data indicating the operational state detected by the sensor upon receiving the trigger signal from the communication unit, and monitors the actuator based on the collected operational state data.

16. A mechanical equipment monitoring system for monitoring a state of a mechanical equipment, the mechanical equipment including an actuator and a communication unit for sending a trigger signal when the actuator is in a suitable condition, the mechanical equipment monitoring system comprising:
a sensor for detecting an operational state of the actuator;
an information collection device for collecting, from the sensor, operational state data indicating the operational state detected by the sensor, when the information collection device receives the trigger signal from the communication unit; and
an information processing device for monitoring the actuator based on the operational state data obtained from the information collection device.

17. A mechanical equipment monitoring system for monitoring a state of a mechanical equipment, the mechanical equipment including an actuator and a communication unit for sending a trigger signal when the actuator is in a suitable condition, the mechanical equipment monitoring system comprising:
a sensor for detecting an operational state of the actuator; and
an information collection device for collecting, from the sensor, operational state data indicating the operational state detected by the sensor, when the information collection device receives the trigger signal from the communication unit, and for monitoring the actuator based on the operational state data collected.

18. A mechanical equipment monitoring method for use with a mechanical equipment monitoring system, the mechanical equipment monitoring system including a sensor, a mechanical equipment having an actuator and a communication unit, an information collection device, and an information processing device, the mechanical equipment monitoring method comprising:
a signal transmission step of causing the communication unit to transmit a trigger signal to the information collection device when the actuator is in a suitable condition for the sensor to detect an operational state of the actuator;
a data collection step of collecting, from the sensor, operational state data indicating the operational state detected by the sensor when the information collection device receives the trigger signal; and
a monitoring step for causing the information processing device to perform monitoring of the actuator based on the operational state data collected by the information collection device.

19. The mechanical equipment monitoring method according to claim 18, wherein the suitable condition is a state in which the actuator is operated at an equal speed over a predetermined period, a state in which the actuator increases its speed from a stop, keeps the speed over a certain period and then decreases the speed to stop, a state in which an amount of variation in a load applied to the actuator is equal to or less than a predetermined value, or a state in which an amount of variation in temperature of the actuator is equal to or less than a preset value.

20. The mechanical equipment monitoring method according to claim 18 or 19, wherein the mechanical equipment has a control unit, and
the mechanical equipment monitoring method further comprises a control step for causing the control unit to control the actuator such that the actuator is brought into the suitable condition.

21. The mechanical equipment monitoring method according to claim 20 further comprising:
a notification sending step of sending a completion notification to the mechanical equipment when the information collection device completes collection of the operational state data;
a receiving step for causing the communication unit to receive the completion notification; and
a stop step of stopping control performed by the control unit so that the control unit no longer controls the actuator to bring the actuator into the suitable condition when the communication unit receives the completion notification.

22. The mechanical equipment monitoring method according to claim 20 further comprising a stop step of stopping control performed by the control unit so that the control unit no longer controls the actuator to bring the actuator into the suitable condition when a predetermined time elapses from when the control unit starts the control of bringing the actuator into the suitable condition.

23. The mechanical equipment monitoring method according to claim 20, wherein the mechanical equipment has a plurality of types of said actuators, and the control step causes the control unit of the mechanical equipment to bring only one actuator of the plurality of types of said actuators into the suitable condition, and to halt the operation of the remaining actuators.

24. The mechanical equipment monitoring method according to claim 23, wherein the actuator includes at least one of a bearing, a ball screw and a linear guide.

25. The mechanical equipment monitoring method according to claim 18 or 19, wherein the signal transmission step causes the communication unit to transmit the trigger signal to the information collection device when the actuator is brought into the suitable condition while the mechanical equipment is carrying out machining using the actuator.

26. The mechanical equipment monitoring method according to claim 18 or 19 further comprising a storage step of storing, in a storage device, a result of monitoring to the actuator by the information processing device.

27. The mechanical equipment monitoring method according to claim 18 or 19, wherein the sensor is an acceleration sensor that detects vibrations of the actuator, and the operational state data is vibration data of the actuator.

28. The mechanical equipment monitoring method according to claim 18 or 19, wherein the sensor is a first sensor for detecting vibrations of the actuator,
the mechanical equipment monitoring system further includes:
a second sensor for detecting a current value and/or temperature of the actuator; and
an information integration device for acquiring detection data of the second sensor,
the mechanical equipment monitoring method further comprises:
an acquiring step of causing the information integration device to obtain detection data of the first sensor from the information collection device; and
a data transmission step of causing the information integration device to time-synchronize the detection data of the first sensor with the detection data of the second sensor and transmit the time-synchronized detection data of the first and second sensors to the information processing device, and
the monitoring step causes the information processing device to monitor the actuator based on the detection data of the first sensor and the detection data of the second sensor.

29. The mechanical equipment monitoring method according to claim 28, wherein the mechanical equipment monitoring system further includes a third sensor for detecting a rotational speed of the actuator,
the acquiring step further causes the information integration device to obtain detection data of the third sensor,
the data transmission step time-synchronizes the detection data of the first sensor with the detection data of the second sensor and the detection data of the third sensor, and transmits the time-synchronized detection data of the first to third sensors to the information processing device, and
the monitoring step causes the information processing device to monitor the actuator based on the detection data of the first sensor, the detection data of the second sensor and the detection data of the third sensor.

30. The mechanical equipment monitoring method according to claim 18 or 19, wherein the sensor is a first sensor for detecting vibrations of the actuator,
the mechanical equipment monitoring system further includes:
a second sensor for detecting a current value and/or temperature of the actuator; and
an information integration device for acquiring detection data of the second sensor,
the mechanical equipment monitoring method further comprises:
an acquiring step of causing the information collection device to obtain detection data of the second sensor from the information integration device; and
a data transmission step of time-synchronizing the detection data of the first sensor with the detection data of the second sensor and transmit the time-synchronized detection data of the first and second sensors to the information processing device, and
the monitoring step of causing the information processing device to monitor the actuator based on the detection data of the first sensor and the detection data of the second sensor.

31. The mechanical equipment monitoring method according to claim 30, wherein the mechanical equipment monitoring system further includes a third sensor for detecting a rotational speed of the actuator,
the acquiring step causes the information integration device to obtain detection data of the third sensor,
the data transmission step causes information integration device to transmit the detection data of the second sensor and the detection data of the third sensor to the information collecting device, and causes the information collecting device to time-synchronize the detection data of the first sensor with the detection data of the second sensor and the detection data of the third sensor and transmit the time-synchronized detection data of the first to third sensors to the information processing device, and
the monitoring step causes the information processing device to monitor the actuator based on the detection data of the first sensor, the detection data of the second sensor and the detection data of the third sensor.

32. A mechanical equipment monitoring method for use with a mechanical equipment monitoring system, the mechanical equipment monitoring system including a sensor, a mechanical equipment and an information collection device, the mechanical equipment having an actuator and a communication unit, the mechanical equipment monitoring method comprising:
a signal transmission step of causing the communication unit to send a trigger signal to the information collection device when the actuator is in a suitable condition for the sensor to detect an operational state of the actuator; and
a monitoring step of collecting, from the sensor, operational state data indicating the operational state detected by the sensor when the information collection device receives the trigger signal, and monitoring the actuator based on the operational state data collected.

33. A mechanical equipment monitoring method for use with a mechanical equipment monitoring system, the mechanical equipment monitoring system including a sensor, an information collection device and an information processing device, and the mechanical equipment monitoring system configured to monitor a state of a mechanical equipment, the mechanical equipment having an actuator and a communication unit for sending a trigger signal when the actuator is in a suitable condition, the mechanical equipment monitoring method comprising:
a data transmission step of causing the information collection device to collect, from the sensor, operational state data indicating operational state of the actuator detected by the sensor when the information collection device receives the trigger signal from the communication unit, and transmit the operational state data to the information processing device; and
a monitoring step of causing the information processing device to monitor the actuator based on the operational state data which is received by the information processing device.

34. A mechanical equipment monitoring method for use with a mechanical equipment monitoring system, the mechanical equipment monitoring system including a sensor and an information collection device, and the mechanical equipment monitoring system configured to monitor a state of a mechanical equipment, the mechanical equipment having an actuator and a communication unit for sending a trigger signal when the actuator is in a suitable condition, the mechanical equipment monitoring method comprising:
causing the information collection device to collect, from the sensor, operational state data indicating operational state of the actuator detected by the sensor when the information collection device receives the trigger signal from the communication unit; and
monitoring the actuator based on the operational state data collected.
